# EUROPÄISCHE PATENTSCHRIFT

(11) **EP 4 363 150 B1**
(45) Veröffentlichungstag und Bekanntmachung des Hinweises auf die Patenterteilung: **28.05.2025**
(21) Anmeldenummer: 22740341.7
(22) Anmeldetag: 27.06.2022
(51) Int. Cl.: B23K 20/00, B23K 20/10

(54) **ULTRASCHALLSCHWEISSANLAGE SOWIE VERFAHREN ZUR SCHWEISSENDEN BEARBEITUNG VON MATERIALIEN**
ULTRASONIC WELDING SYSTEM AND METHOD FOR WELDING PROCESSING OF MATERIALS
SYSTEME DE SOUDAGE PAR ULTRASONS ET PROCEDE DE TRAITEMENT PAR SOUDAGE DE MATERIAUX

(30) Priorität: 02.07.2021 DE 102021117169
(43) Veröffentlichungstag der Anmeldung: 08.05.2024
(73) Patentinhaber: Herrmann Ultraschalltechnik GmbH & Co. KG, 76307 Karlsbad (DE)
(72) Erfinder: AUST, Volker, 75217 Birkenfeld (DE); RIEHM, Ulf, 76275 Ettlingen (DE); MEIER, Jens, 76307 Karlsbad (DE)
(74) Vertreter: WSL Patentanwälte Partnerschaft mbB
(86) Internationale Anmeldenummer: PCT/EP2022/067491
(87) Internationale Veröffentlichungsnummer: WO 2023/274916

(56) Entgegenhaltungen:
- CH-A- 362 296
- DE-A1- 102013 208 749
- DE-B4- 102017 215 483
- US-A- 2 985 954
- US-A- 3 917 146
- US-A1- 2006 208 033

## Beschreibung

Die vorliegende Erfindung betrifft eine Ultraschallschweißanlage mit einer Ultraschallschwingeinheit und einem Gegenwerkzeug. Die Ultraschallschwingeinheit weist eine Sonotrode und einen Konverter auf, wobei die Sonotrode und der Konverter entlang einer Längsachse gegebenenfalls unter Zwischenschaltung eines Amplitudentransformators hintereinander angeordnet sind. Die Ultraschallschwingeinheit ist derart ausgelegt, dass sie mit einer Ultraschallschwingung in Richtung der Längsachse mit einer Wellenlänge λ in Resonanz gebracht werden kann.

Die Sonotrode weist eine Siegelfläche auf, die parallel zur Längsachse angeordnet ist oder mit dieser einen Winkel kleiner als 90° einschließt. Das Gegenwerkzeug weist eine Gegenwerkzeugsiegelfläche auf, die derart angeordnet ist, dass das zu bearbeitende Material zwischen der Siegelfläche der Sonotrode und der Gegenwerkzeugsiegelfläche für die schweißende Bearbeitung angeordnet werden kann. Dabei sind Sonotrode und/oder Gegenwerkzeug in einer Bearbeitungsrichtung senkrecht zur Längsachse bewegbar, wodurch der Abstand zwischen der Siegelfläche der Sonotrode und der Gegenwerkzeugsiegelfläche verstellt werden kann.

Eine solche Ultraschallschweißanlage ist bekannt aus der WO 2020/126845.

Die Siegelfläche der Sonotrode und die Gegenwerkzeugsiegelfläche müssen relativ zueinander bewegbar sein. Zum einen ist es notwendig, die beiden Siegelflächen voneinander weg zu bewegen, um das zu bearbeitende Material zwischen den beiden Siegelflächen zu positionieren. Zum anderen ist es während der schweißenden Bearbeitung, d. h. dann, wenn die Sonotrode in eine Ultraschallschwingung versetzt ist und mit ihrer Siegelfläche mit dem zu bearbeitenden Material in Kontakt tritt, notwendig, eine Schweißkraft auf das Material auszuüben, so dass hierzu die beiden Siegelflächen aufeinander zu bewegt werden.

Zu diesem Zweck ist im Stand der Technik eine Linearführung vorgesehen, die eine Linearbewegung der beiden Siegelflächen aufeinander zu und voneinander weg ermöglicht. Die Ultraschallschwingeinheit wird an einer Halterung gehalten, welche wiederum mit Hilfe eines Pneumatikzylinders entlang der Linearführung bewegt werden kann.

Um ein optimales Schweißergebnis zu erzielen, wird es zunehmend wichtig, die Schweißkraft, d. h. die Kraft mit der die Siegelfläche der Sonotroden auf das zu bearbeitende Material drückt, sehr genau einzustellen. Zudem sind zeitweise sehr niedrige Schweißkräfte ausreichend und notwendig. Dies ist mit Hilfe der genannten mit einem Pneumatikzylinder betriebenen Linearführung jedoch nur sehr schwierig zu verwirklichen. Zum einen wirkt sich die Reibung in der Führung und im Pneumatikzylinder negativ aus. Außerdem besteht eine Hysterese innerhalb des Pneumatikzylinders, die eine gute Reproduzierbarkeit der Schweißkraft erschwert. Zudem sind die Pneumatikzylinder bei kleinen Schweißkraftveränderungen relativ langsam, was sich auf die Zykluszeit negativ auswirkt. Die CH 362 296 A offenbart eine Ultraschallschweißeinrichtung gemäß dem Oberbegriff des Anspruchs 1. Die DE 10 2013 208749 A1 offenbart eine weitere Ultraschallschweißeinrichtung mit der Möglichkeit einer rotatorischen und translatorischen Positionierung einer Sonotrode.

Ausgehend von dem beschriebenen Stand der Technik ist es daher Aufgabe der vorliegenden Erfindung eine Ultraschallschweißanlage anzugeben, welche die beschriebenen Nachteile zumindest verringert.

Erfindungsgemäß wird diese Aufgabe durch eine Ultraschallschweißeinrichtung nach Anspruch 1 sowie durch ein Verfahren nach Anspruch 8 gelöst.

Dabei wird unter dem Begriff "senkrecht zur Längsachse" jegliche Orientierung der Drehachse verstanden, die innerhalb einer senkrecht zur Längsachse orientierten Ebene liegt. Es ist daher nicht notwendig, dass sich die Längsachse und die Drehachse schneiden.

Durch die Abkehr von der Linearführung zur Einstellung der Schweißkraft ist eine viel feinere Einstellbarkeit der Schweißkraft gegeben.

In einer bevorzugten Ausführungsform hat die Siegelfläche der Sonotrode eine Größe von mindestens 0,25 cm², vorzugsweise von mindestens 0,5 cm² und am besten von mindestens 1 cm².

In einer weiteren bevorzugten Ausführungsform hat das Gegenwerkzeug eine Gegenwerkzeugsiegelfläche, die korrespondierend zu der Siegelfläche der Sonotrode ausgebildet ist, so dass während der Bearbeitung der Abstand zwischen den Siegelflächen konstant ist.

Nach der Erfindung wird die Ultraschallschwingeinheit oder das Gegenwerkzeug von einer Linearhalterung gehalten, die mit einer Linearführung verbunden ist, mit der die Linearhalterung in der Bearbeitungsrichtung zwischen zwei Positionen hin und her bewegt werden kann, wobei vorzugsweise ein erster pneumatischer Antrieb für die Bewegung der Linearhalterung zwischen den zwei Positionen vorgesehen ist. Somit weist die Ultraschallschweißanlage sowohl eine Drehhalterung als auch eine Linearhalterung auf.

Mit Hilfe der Linearführung können Sonotrode und Gegenwerkzeug voneinander wegbewegt werden, sodass das zu bearbeitende Material zwischen der Siegelfläche der Sonotrode und der Gegenwerkzeugfläche positioniert werden kann. Dann können mit Hilfe der Linearführung Sonotrode und Gegenwerkzeug wieder aufeinander zubewegt werden. Die Einstellung der Schweißkraft erfolgt allerdings über die Drehung der Ultraschallschwingeinheit um die Drehachse. Durch diese Maßnahme kann der größte Teil der notwendigen Bewegung von der Linearhalterung bereitgestellt werden, während die Drehhalterung lediglich für die Bereitstellung und Variation der Schweißkraft verwendet wird.

Es kann ein pneumatischer Antrieb für die Bewegung der Linearhalterung zwischen den zwei Positionen vorgesehen sein, wie dies auch aus dem Stand der Technik bekannt ist.

Nach der Erfindung wird entweder die Sonotrode oder das Gegenwerkzeug von sowohl der Drehhalterung als auch der Linearhalterung gehalten, wobei vorzugsweise die Sonotrode von sowohl der Drehhalterung als auch der Linearhalterung gehalten wird. Somit kann die Funktion der Linearhalterung und der Drehhalterung von einer einzigen Linear-Dreh-Halterung verwirklicht werden, die vorzugweise die Sonotrode relativ zum Gegenwerkzeug linear verschieben und um die Drehachse drehen kann.

Für die Bewegung der Drehhalterung um die Drehachse kann ein zweiter pneumatischer Antrieb vorgesehen sein. Dieser zweite pneumatische Antrieb kann an einem Punkt der Drehhalterung angreifen, der von der Drehachse beanstandet ist. Die Bezeichnung "zweiter pneumatischer Antrieb" wird hier verwendet, um diesen von dem optionalen ersten pneumatischen Antrieb der Linearhalterung zu unterscheiden. Es sind somit Ausführungsformen mit nur einem ersten pneumatischen Antrieb, mit nur einem zweiten pneumatischen Antrieb und mit einem ersten und einem zweiten pneumatischen Antrieb möglich.

In einer besonders bevorzugten Ausführungsform greift der Antrieb der Drehaltern, z.. B. ein Pneumatikzylinder, an einem Punkt an der Drehhalterung an, der weiter von der Drehachse entfernt ist als die Sonotrodensiegelfläche von der Drehachse entfernt ist. Dadurch kann eine sehr feine Einstellung der Schweißkraft erfolgen.

Für die Bewegung der Drehhalterung kann auch eine Feder vorgesehen sein, deren Federkraft vorzugweise einstellbar ist. Als Feder kann beispielsweise eine Spiralfeder oder eine Gasfeder verwendet werden. In einer bevorzugten Ausführungsform ist die Feder derart vorgespannt, dass die Drehhalterung in der vorgesehenen Arbeitsposition, in welcher ein Material zwischen Sonotrode und Gegenwerkzeug bearbeitet werden soll, Sonotrode und Gegenwerkzeug aufeinander drückt. Mit der Feder wird somit eine vorzugweise einstellbare Schweißkraft auf das Material aufgebracht.

In einer weiteren bevorzugten Ausführungsform ist eine Steuerung vorgesehen, welche während der schweißenden Bearbeitung eine Drehung der Ultraschallschwingeinheit oder des Gegenwerkzeuges um die Drehachse bewirkt. Durch die Drehung um die Drehachse während der Bearbeitung, d.h. dann wenn sowohl Siegelfläche als auch Gegenwerkzeugsiegelfläche in Kontakt mit dem zu bearbeitenden Material sind, wird somit der Abstand zwischen Siegelfläche und Gegenwerkzeugsiegelfläche verringert. Dabei ist vorzugsweise die Steuerung derart ausgebildet, dass während der schweißenden Bearbeitung der Abstand zwischen der Siegelfläche der Sonotrode und der Gegenwerkzeugsiegelfläche allein durch die Drehung um die Drehachse verstellt wird. Eine Bewegung der Linearhalterung erfolgt somit nicht. Mit anderen Worten ist die Bewegung der Linearhalterung lediglich zur Positionierung der Siegelfläche relativ zur Gegenwerkzeugsiegelfläche vorgesehen, während die Bearbeitung dann ausschließlich über die Drehung um die Drehachse erfolgt.

In einer weiteren bevorzugten Ausführungsform weist das Gegenwerkzeug ein Aufnahmeelement auf, welches die Gegenwerkzeugsiegelfläche umfasst, wobei das Aufnahmeelement in mindestens zwei Aufnahmeelementpositionen an dem Gegenwerkzeug befestigt werden kann.

Je nachdem welche zusätzliche Kraft über die Drehachse ausgeübt wird bzw. um welchen Winkel die Ultraschallschwingeinheit um die Drehachse gedreht wird, verschiebt sich der Punkt, bei welchem die Siegelfläche der Sonotrode die Gegenwerkzeugsiegelfläche berührt. Daher kann in der bevorzugten Ausführungsform die Gegenwerkzeugsiegelfläche in mindestens zwei Positionen mit dem Gegenwerkzeug befestigt werden.

In einer bevorzugten Ausführungsform weist die Drehhalterung ein Drehlager oder ein Festkörpergelenk auf, welches die Drehbarkeit der Ultraschallschwingeinheit um die Drehachse ermöglicht. In einer bevorzugten Ausführungsform schneidet die Drehachse die Längsachse nicht.

Des Weiteren betrifft die vorliegende Erfindung ein Verfahren zur schweißenden Bearbeitung von Materialien, wie z.B. metallischen Litzen oder Metallfolien. Erfindungsgemäß wird ein Verfahren, das die oben genannten Nachteile überwindet, dadurch verwirklicht, dass eine Ultraschallschweißanlage wie gerade beschrieben verwendet wird. Dabei wird das zu bearbeitende Material zwischen der Siegelfläche der Sonotrode einerseits und der Gegenwerkzeugsiegelfläche andererseits angeordnet. Durch die Bewegung der Siegelfläche der Sonotrode in Richtung der Gegenwerkzeugsiegelfläche mittels der Drehhalterung kann dann eine Schweißkraft auf das zu bearbeitende Material ausgeübt werden. Wird gleichzeitig die Ultraschallschwingeinheit in Schwingung versetzt, kann eine Ultraschallschwingung in das Material eingebracht und dadurch eine Verschweißung bewirkt werden.

In einer bevorzugten Ausführungsform wird daher zuerst die Ultraschallschwingeinheit entlang der Linearführung derart bewegt, dass der Abstand zwischen der Siegelfläche der Sonotrode und der Gegenwerkzeugsiegelfläche verkleinert wird, und danach wird eine Drehung der Ultraschallschwingeinheit um die Drehachse vorgenommen, wodurch die für die Schweißbearbeitung notwendige Kraft auf das zu bearbeitende metallische Material aufgebracht wird. Das Verfahren wird daher insbesondere zur Verschweißung von Metallfolien oder metallischen Litzen eingesetzt.

Weitere Vorteile, Merkmale und Anwendungsmöglichkeiten der vorliegenden Erfindung werden deutlich anhand der folgenden Beschreibung einer bevorzugten Ausführungsform sowie der zugehörigen Figuren. Es zeigen:
- Figur 1: eine seitliche Draufsicht auf eine erfindungsgemäße Ultraschallschweißanlage in einer Arbeitsposition,
- Figur2: eine seitliche Draufsicht auf die Ultraschallschweißanlage von Figur 1 in einer Grundposition,
- Figur 3: eine teilgeschnittene Ansicht durch den Antrieb zur Aufbringung der Schweißkraft und
- Figur 4: eine Explosionsansicht der Gegenwerkzeugverstellung.

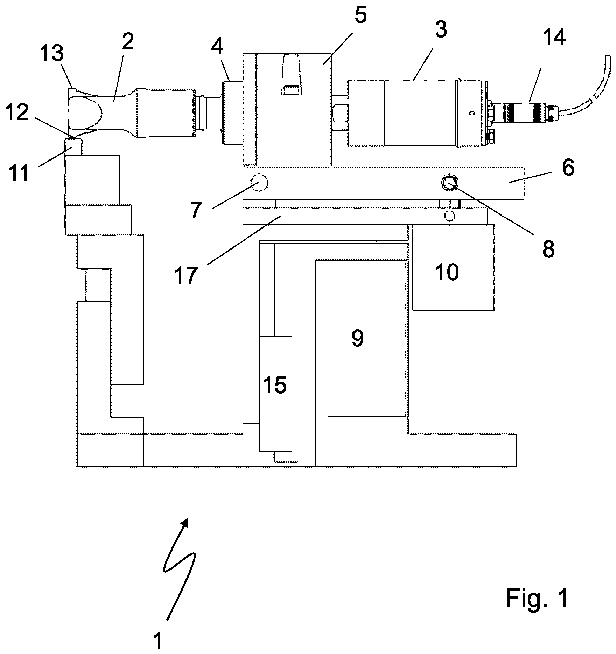

In Figur 1 ist eine Arbeitsposition einer erfindungsgemäßen Ausführungsform der Ultraschallschweißanlage gezeigt. Die Ultraschallschweißanlage 1 weist eine Ultraschallschwingeinheit auf, die im gezeigten Beispiel aus der Sonotrode 2, einem Konverter 3 sowie einem zwischen dem Konverter 3 und der Sonotrode 2 angeordneten Amplitudentransformator 4 besteht. Der Konverter 3 erhält über das Kabel 14 ein hochfrequentes elektrisches Signal, welches der Konverter in eine mechanische Longitudinalschwingung umwandelt, deren Amplitude durch den Amplitudentransformator 4 verändert auf die Sonotrode 2 übertragen wird. Konverter 3, Amplitudentransformator 4 und Sonotrode 2 sind derart aufeinander abgestimmt, dass bei einer bestimmten Wellenlänge die Ultraschallschwingeinheit in eine resonante Schwingung versetzt werden kann.

Die Ultraschallschwingeinheit wird von einem als Mantelelement ausgebildeten Halteelement 5, welches im gezeigten Beispiel den Amplitudentransformator mantelförmig umschließt, gehalten. Dabei ist das Halteelement 5 derart mit dem Amplitudentransformator 4 verbunden, dass die Schwingung der Ultraschallschwingeinheit möglichst wenig beeinflusst wird. Ist kein Amplitudentransformator vorgesehen, kann das Halteelement z. B. den Konverter 3 halten. Das Halteelement 5 greift an einem Schwingungsknoten der sich entlang der Längsachse ausbildenden, stehenden Welle an. Die Längsachse A verläuft in Figur 1 waagerecht, sodass die Sonotrode 2, der Amplitudentransformator 4 und der Konverter 3 entlang der Längsachse hintereinander angeordnet sind.

Die Sonotrode 2 hat an ihrem dem Amplitudentransformator 4 abgewandten Ende mehrere Siegelflächen 12, 13, wobei eine Siegelfläche 12 dem Gegenwerkzeug 11 zugewandt ist, während eine weitere Siegelfläche 13 vom Gegenwerkzeug 11 abgewandt ist. Wird die Ultraschallschwingeinheit in der dargestellten Position verwendet, so wird lediglich die Siegelfläche 12 der Sonotrode 2 verwendet. Kommt es im Laufe der Bearbeitung zu einer Abnutzung der Siegelfläche 12, kann die Sonotrode 2 um ihre Längsachse z. B. um 180° gedreht werden, wenn das Halteelement 5 vorübergehend gelöst wird, sodass dann die weitere Siegelfläche 13 der Sonotrode gegenüber dem Gegenwerkzeug 11 zu liegen kommt. In den Figuren sind nur zwei Siegelflächen 12, 13 zu erkennen. Die Sonotrode 2 kann aber auch mehr als zwei Siegelflächen haben. Hat die Sonotrode zum Beispiel vier Siegelflächen, können diese nacheinander verwendet werden, wenn die Sonotrode 2 jeweils um 90° um ihre Längsachse gedreht wird.

Die gezeigte Ausführungsform ist für das Bearbeiten von Metallen vorgesehen. Die Siegelflächen 12, 13 sind parallel zur Längsachse orientiert. Insbesondere dann, wenn keine metallischen Materialien bearbeitet werden, kann die Siegelfläche auch orthogonal zur Längsachse angeordnet werden, so dass die dem Konverter abgewandte Stirnfläche der Sonotrode als Siegelfläche fungiert. In diesem Fall sollte dann auch die Gegenwerkzeugsiegelfläche orthogonal zur Längsachse der Ultraschallschwingeinheit angeordnet sein.

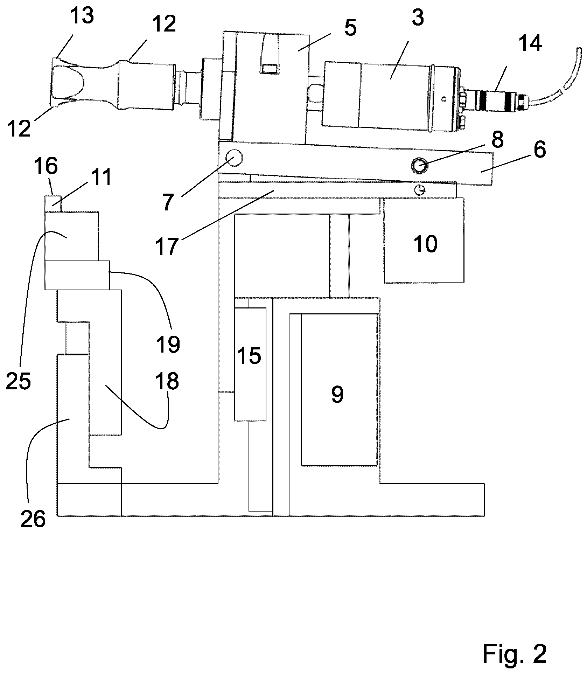

Das Halteelement 5 ist an einem Hebelelement 6 befestigt, welches über ein Drehlager 7 mit einem Schlittenelement 17 verbunden ist. Das Schlittenelement 17 ist über eine Linearführung 15 in vertikaler Richtung, d. h. senkrecht zur Längsachse zwischen zwei Positionen hin und her bewegbar. Um dies zu bewerkstelligen ist der Pneumatikzylinder 9 vorgesehen. Wird der Pneumatikzylinder 9 betätigt, wird das Schlittenelement 17 nach oben bewegt. Eine solche Position ist in Figur 2 dargestellt. Das Hebelelement 6 erweist ein von der Drehachse 7 entferntes Drehlager 8 auf, welches über den zweiten Pneumatikzylinder 10 in vertikaler Richtung nach unten gezogen werden kann, sodass sich das Hebelelement 6 einschließlich der daran befestigten Ultraschallschwingeinheit um die Drehachse 7 im Uhrzeigersinn dreht.

In Figur 2 ist eine Grundposition gezeigt, in welcher sowohl der Pneumatikzylinder 9 das Schlittenelement 17 in seine obere Position bewegt hat als auch der zweite Pneumatikzylinder 10 das Drehlager 8 in seine untere Position bewegt hat, wodurch es zu einer Verkippung des Ultraschallsystems um die Drehachse 7 gekommen ist.

In der in Figur 2 gezeigten Position kann das zu bearbeitende Material, welches vorzugsweise ein metallisches Material ist, zwischen der Siegelfläche 12 der Sonotrode und der Gegenwerkzeugsiegelfläche 16 positioniert werden.

Wird nun die Bearbeitung gestartet, so wird zunächst mit Hilfe des ersten Pneumatikzylinders 9 das Schlittenelement 17 über die Linearführung 15 nach unten bewegt, wodurch sich der Abstand zwischen der Siegelfläche 12 der Sonotrode 2 und der Gegenwerkzeugsiegelfläche 16 verringert. Während dieser Zeit kann die Ultraschallschwingeinheit bereits mit einer Ultraschallschwingung angeregt sein. Dies kann jedoch auch zu einem späteren Zeitpunkt unmittelbar vor der schweißenden Bearbeitung erfolgen.

Für die schweißende Bearbeitung wird nun lediglich der zweite Pneumatikzylinder 10 benötigt, welcher das Drehlager 8 und damit das Hebelelement 6 im Gegenuhrzeigersinn um die Drehachse 7 dreht und damit eine Schweißkraft über die Siegelfläche 12 der Sonotrode 2 auf das zu bearbeitende Material ausübt.

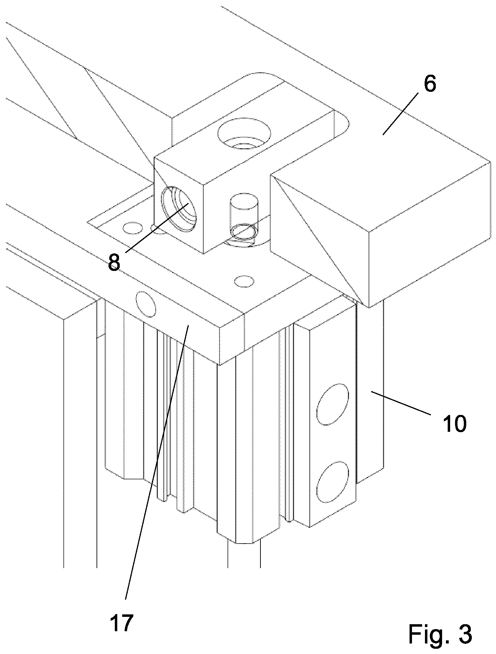

Zur Verdeutlichung ist in Figur 3 eine teilgeschnittene Detailansicht des Drehlagers 8 im Hebelelement 6 dargestellt. Der zweite Pneumatikzylinder 10 ist mit dem Schlitten 17 verbunden. Durch die Bewegung des Kolbens, welcher mit dem Drehlager 8 verbunden ist, kann das Drehlager 8 in Richtung des Schlittens 17 bewegt werden oder von diesem wegbewegt werden. Da das Drehlager drehbar mit dem Hebelelement 6 verbunden ist, kann dadurch das Hebelelement 6 um einige Grad im Uhrzeigersinn oder im Gegenuhrzeigersinn um die Achse 7 gedreht werden, wodurch auch die Siegelfläche 12 der Sonotrode 2 um die Drehachse 7 gedreht wird.

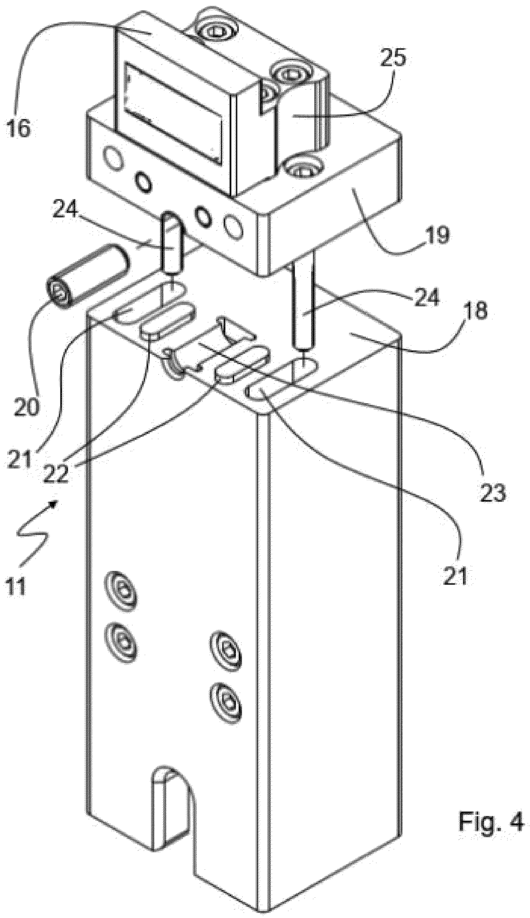

In Figur 4 ist eine Explosionsansicht des Gegenwerkzeuges 11 dargestellt. Das Gegenwerkzeug 11 besteht aus einem unteren Gegenwerkzeugträger 26, einem oberen Gegenwerkzeugträger 18 und einem daran befestigbaren Aufnahmeelement 19, welches das Siegelflächenglied 25 mit der Gegenwerkzeugsiegelfläche 16 umfasst. Der obere Gegenwerkzeugträger 18 kann in der Höhe relativ zum unteren Gegenwerkzeugträger 26 verstellt werden, um den Abstand zwischen Gegenwerkzeug 11 und Sonotrode 2 grob einzustellen. Der obere Gegenwerkzeugträger 18 weist eingeformte Nuten 21 sowie vorstehende Nutensteine 22 auf. Das Aufnahmeelement 19 kann somit derart auf den Gegenwerkzeugträger 18 aufgesetzt werden, sodass die Nutensteine 22 des oberen Gegenwerkzeugträgers 18 in den entsprechenden Nuten des Aufnahmeelements 19 zu liegen kommen. In dieser Position kann das Aufnahmeelement 19 relativ zum oberen Gegenwerkzeugträger18 entlang der Ausrichtung der Nuten verschoben werden. Diese Verschiebung erfolgt mit Hilfe der Gewindestange 20, welche in der Nut 23 zu liegen kommt und sich dort am Nutgrund abstützt. Durch Drehen der Gewindestange 20 kann das Aufnahmeelement 19 in Richtung der Nuten 21 relativ zu dem oberen Gegenwerkzeugträger 18 verschoben werden. Das Aufnahmeelement 19 kann mit Hilfe von Befestigungsschrauben 24 am oberen Gegenwerkzeugträger befestigt werden.

Das Aufnahmeelement 19 umfasst ein Siegelflächenglied 25, welches die Gegenwerkzeugsiegelfläche 16 aufweist. Daher kann durch Drehen der Gewindestange 20 die Gegenwerkzeugsiegelfläche 16 bewegt werden.

### Bezugszeichen

- 1: Ultraschallschweißanlage
- 2: Sonotrode
- 3: Konverter
- 4: Amplitudentransformator
- 5: Halteelement
- 6: Hebelelement
- 7, 8: Drehlager
- 9: erster Pneumatikzylinder
- 10: zweiter Pneumatikzylinder
- 11: Gegenwerkzeug
- 12, 13: Siegelfläche
- 14: Kabel
- 15: Linearführung
- 16: Gegenwerkzeugsiegelfläche
- 17: Schlittenelement
- 18: Oberer Gegenwerkzeugträger
- 19: Aufnahmeelement
- 20: Gewindestange
- 21: eingeformte Nuten
- 22: vorstehende Nutensteine
- 23: Nut
- 24: Befestigungsschrauben
- 25: Siegelflächenglied
- 26: unterer Gegenwerkzeugträger

## Patentansprüche

1. Ultraschallschweißanlage (1) mit einer Ultraschallschwingeinheit, die eine Sonotrode (2) und einen Konverter (3) aufweist, wobei die Sonotrode (2) und der Konverter (3) entlang einer Längsachse gegebenenfalls unter Zwischenschaltung eines Amplitudentransformators hintereinander angeordnet sind und die Ultraschallschwingeinheit mit einer Ultraschallschwingung mit einer Wellenlänge λ in Richtung der Längsachse in Resonanz gebracht werden kann, und mit einem Gegenwerkzeug (11), wobei die Sonotrode (2) eine Siegelfläche (12; 13) aufweist und die Längsachse parallel zur Siegelfläche (12, 13) verläuft oder mit dieser einen Winkel kleiner als 90° einschließt, wobei das Gegenwerkzeug (11) eine Gegenwerkzeugsiegelfläche (16) aufweist, welche der Siegelfläche (12, 13) der Sonotrode (2) zugewandt ist, und die Sonotrode (2) und das Gegenwerkzeug (11) in einer Bearbeitungsrichtung senkrecht zur Längsachse relativ zueinander bewegbar sind, wodurch der Abstand zwischen der Siegelfläche (12, 13) der Sonotrode (2) und der Gegenwerkzeugsiegelfläche (16) verstellt werden kann, wobei die Ultraschallschwingeinheit oder das Gegenwerkzeug von einer Drehhalterung gehalten wird, die um eine Drehachse, die senkrecht zur Längsachse verläuft, gedreht werden kann, wobei die Drehachse derart angeordnet ist, dass durch Drehen der Drehhalterung der Abstand zwischen der Siegelfläche (12, 13) der Sonotrode (2) und der Gegenwerkzeugsiegelfläche (16) verstellt werden kann, wobei die Ultraschallschwingeinheit oder das Gegenwerkzeug von einer Linearhalterung gehalten wird, die mit einer Linearführung verbunden ist, mit der die Linearhalterung in der Bearbeitungsrichtung zwischen zwei Positionen hin und her bewegt werden kann, **dadurch gekennzeichnet, dass** entweder die Sonotrode oder das Gegenwerkzeug von sowohl der Drehhalterung als auch der Linearhalterung gehalten wird.

2. Ultraschallschweißanlage (1) nach Anspruch 1, **dadurch gekennzeichnet, dass** ein erster pneumatischer Antrieb für die Bewegung der Linearhalterung zwischen den zwei Positionen vorgesehen ist.

3. Ultraschallschweißanlage (1) nach Anspruch 1 oder 2, **dadurch gekennzeichnet, dass** die Sonotrode von sowohl der Drehhalterung als auch der Linearhalterung gehalten wird.

4. Ultraschallschweißanlage (1) nach einem der Ansprüche 1 bis 3, **dadurch gekennzeichnet, dass** ein zweiter pneumatischer Antrieb für das Drehen der Ultraschallschwingeinheit um die Drehachse vorgesehen ist, wobei der zweite pneumatische Antrieb vorzugsweise an einem Punkt der ersten Halterung angreift, der von der Drehachse beanstandet ist.

5. Ultraschallschweißanlage nach einem der vorherigen Ansprüche, **dadurch gekennzeichnet, dass** eine Steuerung vorgesehen ist, welche während der schweißenden Bearbeitung eine Drehung der Ultraschallschwingeinheit oder des Gegenwerkzeuges um die Drehachse bewirkt, wobei vorzugsweise die Steuerung derart ausgebildet ist, dass während der schweißenden Bearbeitung der Abstand zwischen der Siegelfläche (12, 13) der Sonotrode (2) und der Gegenwerkzeugsiegelfläche (16) allein durch die Drehung um die Drehachse verstellt wird.

6. Ultraschallschweißanlage (1) nach einem der Ansprüche 1 bis 5, **dadurch gekennzeichnet, dass** das Gegenwerkzeug (11) ein Aufnahmeelement (19) aufweist, welches die Gegenwerkzeugsiegelfläche (16) umfasst, wobei das Aufnahmeelement (19) in mindestens zwei Aufnahmeelementpositionen an dem Gegenwerkzeug (11) befestigt werden kann.

7. Ultraschallschweißanlage (1) nach einem der Ansprüche 1 bis 6, **dadurch gekennzeichnet, dass** die Drehhalterung ein Drehlager oder ein Festkörpergelenk aufweist, welches die Drehbarkeit der Ultraschallschwingeinheit um die Drehachse ermöglicht.

8. Verfahren zur schweißenden Bearbeitung von Materialien, wie z.B. metallischen Litzen oder Metallfolien, **dadurch gekennzeichnet, dass** eine Ultraschallschweißanlage (1) nach einem der Ansprüche 1 bis 7 verwendet wird, dass ein zu bearbeitendes Material zwischen der Siegelfläche der Sonotrode und der Gegenwerkzeugsiegelfläche positioniert wird während die Ultraschallschwingeinheit mit einer Ultraschallschwingung angeregt wird.

9. Verfahren nach Anspruch 8, **dadurch gekennzeichnet, dass** zum Aufbringen einer Schweißkraft auf ein zwischen der Siegelfläche (12, 13) der Sonotrode (2) und der Gegenwerkzeugsiegelfläche (16) angeordnetes metallisches Material die Ultraschallschwingeinheit um Ihre Drehachse gedreht wird.

10. Verfahren nach Anspruch 9, **dadurch gekennzeichnet, dass** zuerst die Ultraschallschwingeinheit entlang der Linearführung derart bewegt wird, dass der Abstand zwischen der Siegelfläche (12, 13) der Sonotrode und der Gegenwerkzeugsiegelfläche (16) verkleinert wird, und danach durch eine Drehung der Ultraschallschwingeinheit um die Drehachse die für die Schweißbearbeitung notwendige Kraft auf das zu bearbeitende metallische Material aufgebracht wird.

## Claims

1. An ultrasonic welding installation (1) with an ultrasonic oscillating unit which comprises a sonotrode (2) and a converter (3), wherein the sonotrode (2) and the converter (3) are arranged one after the other along a longitudinal axis, optionally with the interposition of an amplitude transformer, and the ultrasonic oscillating unit can be caused to resonate with an ultrasonic oscillation with a wavelength λ in the direction of the longitudinal axis, and with a counterpart tool (11), wherein the sonotrode (2) comprises a sealing surface (12; 13) and the longitudinal axis extends parallel to the sealing surface (12, 13) or forms an angle of less than 90° with the latter, wherein the counterpart tool (11) comprises a counterpart tool sealing surface (16) which faces the sealing surface (12, 13) of the sonotrode (2), and the sonotrode (2) and the counterpart tool (11) are movable relative to one another in a processing direction perpendicular to the longitudinal axis, whereby the distance between the sealing surface (12, 13) of the sonotrode (2) and the counterpart tool sealing surface (16) can be adjusted, wherein the ultrasonic oscillating unit or the counterpart tool is held by a rotary holder which can be rotated about a rotation axis extending perpendicularly to the longitudinal axis, wherein the rotation axis is arranged in such a way that the distance between the sealing surface (12, 13) of the sonotrode (2) and the counterpart tool sealing surface (16) can be adjusted by rotating the rotary holder, wherein the ultrasonic oscillating unit or the counterpart tool is held by a linear mount which is connected to a linear guide by means of which the linear mount can be moved back and forth in the processing direction between two positions, **characterized in that** either the sonotrode or the counterpart tool is held by both the rotary holder and the linear mount.

2. The ultrasonic welding installation (1) according to claim 1, **characterized in that** a first pneumatic drive is provided for moving the linear mount between the two positions.

3. The ultrasonic welding installation (1) according to claim 1 or 2, **characterized in that** the sonotrode is held by both the rotary holder and the linear mount.

4. The ultrasonic welding installation (1) according to any one of claims 1 to 3, **characterized in that** a second pneumatic drive is provided for rotating the ultrasonic oscillating unit about the rotation axis, wherein the second pneumatic drive preferably engages a point of the first holder that is spaced from the rotation axis.

5. The ultrasonic welding installation according to any one of the preceding claims, **characterized in that** a control is provided which, during the welding processing, causes the ultrasonic oscillating unit or the counterpart tool to rotate about the rotation axis, wherein preferably the control is configured in such a way that, during the welding processing, the distance between the sealing surface (12, 13) of the sonotrode (2) and the counterpart tool sealing surface (16) is adjusted solely by the rotation about the rotation axis.

6. The ultrasonic welding installation (1) according to any one of claims 1 to 5, **characterized in that** the counterpart tool (11) provides a receiving element (19) which comprises the counterpart tool sealing surface (16), wherein the receiving element (19) can be fixed to the counterpart tool (11) in at least two receiving element positions.

7. The ultrasonic welding installation (1) according to any one of claims 1 to 6, **characterized in that** the rotary holder comprises a rotary bearing or a solid-state joint which enables the ultrasonic oscillating unit to be rotated about the rotation axis.

8. A method for welding processing of materials, such as metallic braids or metal foils, **characterized in that** an ultrasonic welding installation (1) according to any one of claims 1 to 7 is used, that a material to be processed is positioned between the sealing surface of the sonotrode and the counterpart tool sealing surface while the ultrasonic oscillating unit is excited with an ultrasonic vibration.

9. The method according to claim 8, **characterized in that** for applying a welding force to a metallic material arranged between the sealing surface (12, 13) of the sonotrode (2) and the counterpart tool sealing surface (16), the ultrasonic oscillating unit is rotated about its rotation axis.

10. The method according to claim 9, **characterized in that** first the ultrasonic oscillating unit is moved along the linear guide in such a way that the distance between the sealing surface (12, 13) of the sonotrode and the counterpart tool sealing surface (16) is reduced, and then, by rotating the ultrasonic oscillating unit about the rotation axis, the force necessary for the welding processing is applied to the metallic material to be processed.

## Revendications

1. Installation de soudage par ultrasons (1), comprenant une unité vibrante ultrasonique qui comprend une sonotrode (2) et un convertisseur (3), la sonotrode (2) et le convertisseur (3) étant agencés l'un derrière l'autre le long d'un axe longitudinal, éventuellement avec interposition d'un transformateur d'amplitude, et l'unité vibrante ultrasonique pouvant être mise en résonance avec une vibration ultrasonique d'une longueur d'onde λ en direction de l'axe longitudinal, et comprenant un contre-outil (11), la sonotrode (2) comprenant une surface de scellage (12 ; 13) et l'axe longitudinal s'étendant parallèlement à la surface de scellage (12, 13) ou formant avec celle-ci un angle inférieur à 90°, le contre-outil (11) comprenant une surface de scellage de contre-outil (16) qui fait face à la surface de scellage (12, 13) de la sonotrode (2), et la sonotrode (2) et le contre-outil (11) pouvant être déplacés l'un par rapport à l'autre dans une direction d'usinage perpendiculairement à l'axe longitudinal, ce qui permet d'ajuster la distance entre la surface de scellage (12, 13) de la sonotrode (2) et la surface de scellage de contre-outil (16), l'unité vibrante ultrasonique ou le contre-outil étant retenu(e) par un support rotatif pouvant pivoter autour d'un axe de pivotement s'étendant perpendiculairement à l'axe longitudinal, l'axe de pivotement étant agencé de telle manière que la distance entre la surface de scellage (12, 13) de la sonotrode (2) et la surface de scellage de contre-outil (16) puisse être ajustée grâce au pivotement du support rotatif, l'unité vibrante ultrasonique ou le contre-outil étant retenu(e) par un support linéaire relié à un guide linéaire avec lequel le support linéaire peut être déplacé en va-et-vient dans la direction d'usinage entre deux positions, **caractérisée en ce que** la sonotrode ou le contre-outil est retenu(e) à la fois par le support rotatif et par le support linéaire.

2. Installation de soudage par ultrasons (1) selon la revendication 1, **caractérisée en ce qu'**un premier entraînement pneumatique destiné au déplacement du support linéaire entre les deux positions est prévu.

3. Installation de soudage par ultrasons (1) selon la revendication 1 ou 2, **caractérisée en ce que** la sonotrode est retenue à la fois par le support rotatif et par le support linéaire.

4. Installation de soudage par ultrasons (1) selon l'une quelconque des revendications 1 à 3, **caractérisée en ce qu'**un second entraînement pneumatique destiné au pivotement de l'unité vibrante ultrasonique autour de l'axe de pivotement est prévu, le second entraînement pneumatique venant en prise, de manière préférée, à un point, situé à distance de l'axe de pivotement, du premier support.

5. Installation de soudage par ultrasons selon l'une quelconque des revendications précédentes, **caractérisée en ce qu'**une commande est prévue, qui provoque une rotation de l'unité vibrante ultrasonique ou du contre-outil autour de l'axe de rotation pendant l'usinage par soudage, la commande étant de manière préférée conçue de telle manière que, pendant l'usinage par soudage, la distance entre la surface de scellage (12, 13) de la sonotrode (2) et la surface de scellage de contre-outil (16) est ajustée uniquement par la rotation autour de l'axe de rotation.

6. Installation de soudage par ultrasons (1) selon l'une quelconque des revendications 1 à 5, **caractérisée en ce que** le contre-outil (11) comprend un élément de réception (19) comprenant la surface de scellage de contre-outil (16), l'élément de réception (19) pouvant être fixé au contre-outil (11) dans au moins deux positions d'élément de réception.

7. Installation de soudage par ultrasons (1) selon l'une quelconque des revendications 1 à 6, **caractérisée en ce que** le support rotatif comprend un palier rotatif ou une articulation de corps solide qui permet la rotation de l'unité vibrante ultrasonique autour de l'axe de rotation.

8. Procédé d'usinage par soudage de matériaux, tels que des torons métalliques ou des feuilles de métal, **caractérisé en ce qu'**une installation de soudage par ultrasons (1) selon l'une quelconque des revendications 1 à 7 est utilisée, **en ce qu'**un matériau à usiner est positionné entre la surface de scellage de la sonotrode et la surface de scellage de contre-outil tandis que l'unité vibrante ultrasonique est excitée par une vibration ultrasonique.

9. Procédé selon la revendication 8, **caractérisé en ce que** l'unité vibrante ultrasonique est tournée autour de son axe de rotation afin d'appliquer une force de soudage à un matériau métallique agencé entre la surface de scellage (12, 13) de la sonotrode (2) et la surface de scellage de contre-outil (16).

10. Procédé selon la revendication 9, **caractérisé en ce que** l'unité vibrante ultrasonique est d'abord déplacée le long du guide linéaire de telle manière que la distance entre la surface de scellage (12, 13) de la sonotrode et la surface de scellage de contre-outil (16) soit réduite, puis la force nécessaire pour l'usinage par soudage soit appliquée au matériau métallique à usiner grâce à une rotation de l'unité vibrante ultrasonique autour de l'axe de rotation.
